# EUROPEAN PATENT SPECIFICATION

(11) **EP 1 804 400 B1**
(45) Date of publication and mention of the grant of the patent: **28.04.2010**
(21) Application number: 05785145.3
(22) Date of filing: 13.09.2005
(51) Int. Cl.: H04B 10/17, H01S 3/10

(54) **AN OPTICAL TRANSMISSION SYSTEM AND A METHOD OF AMPLIFICATION**
OPTISCHES ÜBERTRAGUNGSSYSTEM UND VERSTÄRKUNGSVERFAHREN
SYSTEME DE TRANSMISSION OPTIQUE ET PROCEDE D'AMPLIFICATION

(30) Priority: 15.09.2004 CN 200410077834
(43) Date of publication of application: 04.07.2007
(73) Proprietor: Huawei Technologies Co., Ltd., Longgang District, Shenzhen Guangdong 518129 (CN)
(72) Inventor: ZHANG, Dejiang, Huawei Administration Building, Shenzhen, Guangdong 518129 (CN)
(74) Representative: Epping - Hermann - Fischer
(86) International application number: PCT/CN2005/001469
(87) International publication number: WO 2006/029569

(56) References cited:
- CN-A- 1 501 597
- FR-A- 2 745 395
- US-A- 5 959 750
- US-A- 6 081 366
- US-B1- 6 263 139
- US-B1- 6 711 359
- TAKAHASHI T ET AL: "Performance prospects of long span, large capacity submarine repeaterless transmission systems" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, vol. 2, 18 November 1996 (1996-11-18), pages 928-932, XP010220057 ISBN: 0-7803-3336-5
- GAUTHERON O ET AL: "407-KM, 2.5-GBIT/S REPEATERLESS TRANSMISSION USING AN ELECTROABSORPTION MODULATOR AND REMOTELY RUMPED ERBIUM-DOPED FIBER POST- AND DPRE-AMPLIFIERS" IEEE PHOTONICS TECHNOLOGY LETTERS, IEEE SERVICE CENTER, PISCATAWAY, NJ, US, vol. 7, no. 3, 1 March 1995 (1995-03-01), pages 333-335, XP000510281 ISSN: 1041-1135

## Description

### Field of the Invention

The present invention relates to an optical transmission system and an amplifying method thereof.

### Background of the Invention

Optical transmission systems are limited by optical fiber loss. A repeater facility is usually needed every tens of kilometers, so that long-distance transmission can be realized. There are two kinds of such repeater facilities: electrical repeaters, which employ Optical-Electrical-Optical (O-E-O) conversion; and optical repeaters, which amplify optical signals directly in light domain. At present, general optical repeaters are implemented using erbium-doped optical fiber amplifiers. For both electrical repeaters and optical repeaters, a repeater is generally needed every tens or hundreds of kilometers.

Document "Performance prospects of long span, large capacity submarine repeaterless transmission systems", T. TAKAHASHI et al., GLOBAL TELECOMMUNICATIONS CONFERENCE, 1998, GLOBECOM '96, COMMUNICATION: THE KEY TO GLOBAL PROSPERITY, LONDON, UK 18-22 NOV. 1996, NEW YORK, NY, USA, IEEE, US, vol. 2, 18 November 1996, pages 928-932, ISBN: 0-7808-3336-5 technically reviews remotely pumped amplifier systems and examines optical signal-to-noise ratio (SNR) designs. In the remotely pumped amplifier systems disclosed, the pumping light triggers Raman amplification in the fiber, that is, the pumping light has an effect of Raman amplification. However, the system does not include a functionally separate Raman pumping unit, and the pump lights of the remotely pumped amplification and the Raman amplification have the same wavelength.

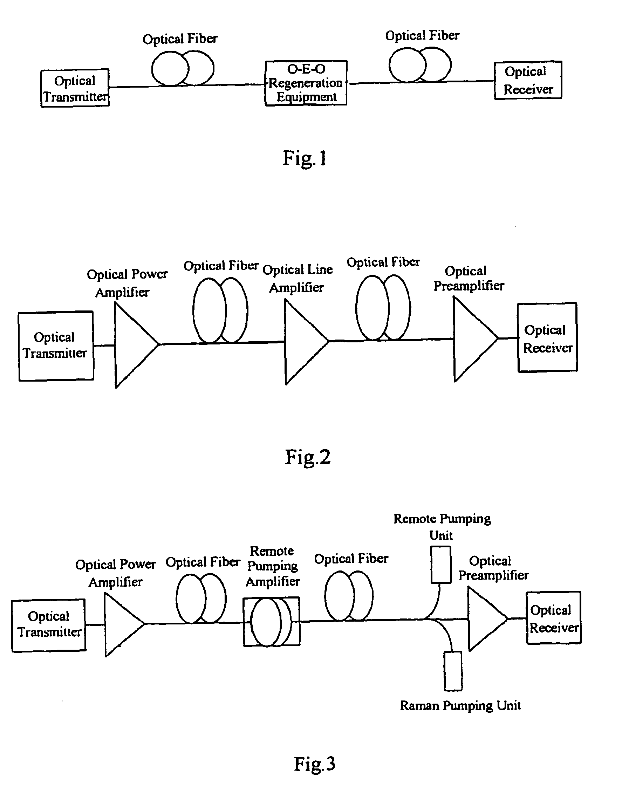

Document "407-KM, 2.5-GBIT/S REPEATERLESS TRANSMISSION USING AN ELECTROABSORPTION MODULATOR AND REMOTELY RUMPED ERBIUM-DOPED FIBER POST-AND DPRE-AMPLIFIERS", O. GAUTHERON et al., IEEE PHOTONICS TECHNOLOGY LETTERS, IEEE SERVICE CENTER, PISCATAWAY, NJ, US, vol. 7, no. 3, 1 March 1995, pages 333-335, ISSN: 1041-1135 discloses a 2.5-Gbit/s repeaterless transmission over 407 km of nondispersion-shifted fiber using an integrated laser/electroabsorption modulator transmitter, a remotely pumped postamplifier and a remotely pumped preamplifier. There is a little Raman gain in a 20 km section, as shown in Fig. 2, and the little Raman gain is introduced by the high power pump, i.e. the Pump LD # 1, which is the same pump and generates pumping light with same wavelength as that of the remotely pumped amplifier.

FR patent No. FR 2745395 discloses an Er-doped optical fiber amplifier adapted to increase the length of transmission path by raising the intensity of pumped light. In an Er-doped optical fiber amplifier 1 for amplifying signal light by means of an Er-doped optical fiber 7, using a 1530 nm band pumping source 8, 1530 nm band pumped light is Raman-amplifier by a 1430 nm-1450 nm band light source 9 on the transmission path of an optical fiber 5, as shown in Fig. 1.

Fig.1 shows a structural schematic diagram of a system for realizing long-distance transmission via electrical repeaters.

As shown in Fig.1, the optical power of light from a light source attenuates continuously as it is transmitted along an optical fiber, and an O-E-O converter is added into the line after a certain distance, then the optical signals continue to be transmitted in the optical fiber after regeneration. To realize ultra long-distance transmission, multi-stage electrical repeaters are needed. It has the following disadvantages when realizing ultra long-haul optical transmission via electrical repeaters:
1) High Cost. Electrical repeaters realize signal regeneration by photoelectric conversion, electrical signal sampling, decision, regeneration and shaping, electro-optic conversion and so on, wherein electro-optic conversion and photoelectric conversion are realized by a laser and a photodetector respectively, which are both expensive optical devices. It is well known that the cost of an electrical repeater is very high, especially for a Large-Capacity Wavelength Division Multiplexing Communication System. Since every electrical repeater needs to demultiplex and multiplex each wavelength and to perform O-E-O conversion according to wavelengths, the equipments needed are more complex, and the cost is extremely high. 2) Not suitable for specific situations. For example, in case of optical communication across broad straits, it is impossible to construct an equipment room in straits, and at the same time, it is difficult to supply power on sea floor, so it is very difficult to realize optical transmission via electrical repeaters. In deserts, since it is difficult to supply power, ultra long-haul optical transmission cannot be implemented using such a scheme. 3) Electrical repeaters need to be maintained. Because the software and hardware of an electrical repeater are complex, they need to be monitored and maintained habitually.

Fig.2 shows a structural schematic diagram of a system for realizing long-distance transmission via optical repeaters. As shown in Fig.2, when long-distance transmission is realized via optical repeaters, optical signals are amplified in light domain by an optical amplifier after they attenuate in an optical fiber, then the optical signals continue to be transmitted in the optical fiber. With multi-stage optical repeaters, long-distance transmission can be realized. This technology has the following disadvantages: 1) High Equipment Cost. Since a large number of optical devices are employed, the cost of optical repeater is very high. Additionally, optical repeaters are normally required to be placed in an equipment room, and the cost of an equipment room is also very high. 2) Similar to electrical repeaters, optical repeaters are not suitable for specific situations. 3) Light repeaters also need to be monitored and maintained.

The above problems are all related to short repeaterless optical transmission distance in the prior art. Therefore, it has now been an urgent problem to extend the repeaterless optical transmission distance.

### Summary of the Invention

In view of the above problems, there is provided an optical transmission system for extending repeaterless optical transmission distance.

To attain the above object, the invention provides an optical transmission system, comprising:
an optical transmitter, for transmitting signal light;
an optical power amplifier, for increasing the power of said signal light;
a remote pumping unit, for supplying remote pumping light;
a remotely pumped amplifier comprising a passive gain medium, for amplifying said signal light with the remote pumping light;
a Raman pumping unit, for providing Raman pumping light for Raman amplifying said signal light;
an optical preamplifier, for amplifying signal light which has been power amplified, remote pumping amplified and Raman pumping amplified; and
an optical receiver, for receiving signal light which has been amplified by the optical preamplifier;
connected in turn via an optical fiber;
wherein the remote pumping light is a pumping light in the waveband of 1480nm, the wavelength of the Raman pumping light is different from that of the remote pumping light, and the wavelength of the Raman pumping light is in a range of 1400 nm-1499 nm.

When the Raman pumping unit and the remote pumping unit are located on the same side of the remote pumping amplifier, the Raman pumping unit and the remote pumping unit are preferably integrated to form an optical pumping unit, or further integrated with the optical preamplifier or the optical power amplifier to form an optical amplifying unit.

Preferably, the system further comprises another Raman pumping unit and/or another remote pumping unit and another remote pumping amplifier located on the other side of the remote pumping amplifier.

The remotely pumped amplifier can be a doped gain medium unit, and the gain medium can be an erbium-doped optical fiber or an erbium-doped waveguide device.

The optical transmission system according to the invention can be used in a wavelength division multiplexing system, and it can realize ultra long-haul optical transmission with optical repeaters.

According to another aspect of the invention, there is provided a method for optical amplification, comprising:
amplifying the power of signal light from an optical transmitter by an optical power amplifier;
amplifying the power amplified signal light under the interaction of passive gain medium and remote pumping light in a remotely pumped amplifier;
amplifying said signal light with Raman pumping light; and
preamplifying signal light, which has been power amplified, remote pumping amplified and Raman pumping amplified, by an optical preamplifier, and receiving signal light by an optical receiver;
wherein the remote pumping light is a pumping light in the waveband of 1480nm, the wavelength of the Raman pumping light is different from that of the remote pumping light, and the wavelength of the Raman pumping light is in a range of 1400 nm-1499 nm.

By using the optical transmission system and the method of the invention, distance of single-span repeaterless optical transmission can be extended. Compared with an optical transmission system with optical repeaters, the system according to the invention can reduce the number of the optical repeaters for achieving the same optical transmission distance. Therefore, equipment cost can be saved. At the same time, the amount of maintenance can be decreased and the maintenance cost can be reduced. Moreover, the optical transmission system of the invention can be used in places with extreme geologic conditions where ultra long-haul transmission is required, such as deserts and straits.

### Brief Description of the Drawings

Fig.1 is a structural schematic diagram of a system for realizing long-distance transmission via electrical repeaters of the prior art;
Fig.2 is a structural schematic diagram of a system for realizing long-distance transmission via optical repeaters of the prior art;
Fig.3 is a structural schematic diagram of an optical transmission system according to the first embodiment of the invention;
Fig.4 is a structural schematic diagram of an optical transmission system according to the second embodiment of the invention;
Fig.5 is a schematic diagram showing the application of an optical transmission system according to the second embodiment of the invention in an ultra long-haul wavelength division multiplexing system;
Fig.6 is a structural schematic diagram of an optical transmission system according to the third embodiment of the invention;
Fig.7 is a structural schematic diagram of an optical transmission system according to the fourth embodiment of the invention;
Fig.8 is a structural schematic diagram of an optical transmission system according to the fifth embodiment of the invention;
Fig.9 is a structural schematic diagram of an optical transmission system according to the sixth embodiment of the invention;
Fig.10 is a structural schematic diagram of an optical transmission system according to the seventh embodiment of the invention;
Fig.11 is a structural schematic diagram of an optical transmission system according to the eighth embodiment of the invention;
Fig.12 is a structural schematic diagram of an optical transmission system according to the ninth embodiment of the invention;
Fig.13 is a structural schematic diagram of an optical transmission system according to the tenth embodiment of the invention; and
Fig.14 is a structural schematic diagram of an optical transmission system according to the eleventh embodiment of the invention.

### Detailed Description of the Embodiments

The invention will now be illustrated in detail referring to the drawings and in conjunction with the embodiments, wherein the drawings and the embodiments are all illustrative and not intended for limitation.

Before introducing the specific embodiments of the invention, the fundamental principle of the invention will be illustrated first. In the invention, optical fiber Raman amplification technology, doped medium optical amplification technology and remote optical pumping technology are employed synthetically.

By using doped medium optical amplifiers as optical power amplifier and preamplifier, the fiber input optical power of the signal light and the optical power input to the receiver can be increased respectively; distributed amplification is performed for the signal light in a transmission link using a distributed Raman amplifier; at the same time, the signal light is amplified at the site of a gain medium in the transmission link using a remote pumping amplifier. It is well known that ultra long-haul transmission system is a system limited by optical signal-to-noise ratio. With the synthetic application of these three optical amplification technologies, the deterioration of optical signal-to-noise ratio of the system can be minimized. Compared with conventional optical repeater systems, the single-span repeaterless transmission distance can be extended greatly; for a system with optical repeaters, the distance between two neighbouring optical repeaters can be extended by using the present scheme, and the number of optical repeaters for the same transmission distance can be decreased.

Embodiments of the invention will now be described.

### The First Embodiment (Embodiment 1)

Fig.3 is a structural schematic diagram of an optical transmission system according to the first embodiment of the invention. As shown in Fig.3, in this embodiment, the optical transmission system comprises an optical transmitter, an optical power amplifier, a remote pumping amplifier, an optical preamplifier and an optical receiver connected in turn via an optical fiber; the system further comprises a remote pumping unit and a Raman pumping unit, wherein the remote pumping unit and the Raman pumping unit are coupled to the optical fiber between the optical preamplifier and the remote pumping amplifier (that is, the light from the remote pumping unit and the Raman pumping unit is coupled into the optical fiber via an optical wavelength division multiplexing device); the former provides pumping light to the remotely pumped amplifier, and the latter provides pumping light for performing distributed Raman amplification on signal light in the optical fiber.

Wherein, the remote pumping amplifier is a doped gain medium unit, and its core component is a doped gain medium, which can amplify signal light under the control of remote pumping light. The gain medium is passive. The whole remotely pumped amplifier is passive too. It needs no power supply and it is not required to be placed in an equipment room. It can be buried underground or laid overhead, like optical cables. It is usually installed in an optical cable joint box. The gain medium can be a section of an erbium-doped optical fiber, or it can be an erbium-doped optical waveguide or other doped gain media.

The remote pumping unit is placed at the same node as the optical preamplifier, for providing pumping light. The pumping light is transmitted in the optical fiber connected with the preamplifier. When the pumping light reaches the remote pumping amplifier, the remotely pumped amplifier amplifies the signal light under the interaction of the gain medium, the pumping light and the signal light. For an erbium-doped gain medium, in order to amplify the signal light in the waveband of 1550 nm, it's required that the wavelength of pumping light is usually in the waveband of 980 nm or 1480 nm. Since the loss of pumping light in the waveband of 980 nm in an optical fiber is very large while the loss of pumping light in the waveband of 1480 nm in an optical fiber is relatively small, the wavelength of remote pumping light is 1480 nm and around.

The Raman pumping unit is also placed at the same node as the optical preamplifier, for providing Raman pumping light. The transmission direction of the Raman pumping light is opposite to the transmission direction of the signal light. Distributed Raman amplification is performed for the signal light in an optical fiber connected with the preamplifier. Since the operating waveband of a long-distance transmission system is in the waveband of 1550 nm and the peak gain wavelength of Raman-amplification is about 100 nm greater than the wavelength of the Raman pumping light, the wavelength of the Raman pumping light is 14XX nm (that is, in a range of 1400 nm-1499 nm), such as 1425 nm, 1455 nm, 1490 nm and so on. In other words, the peak gain wavelength of Raman-amplification of Raman pumping light provided by the Raman pumping unit should correspond to the operating waveband of the signal light. For systems operating in waveband L, the wavelength of its Raman pumping light can exceed 1500 nm.

The optical power amplifier and the preamplifier, which are used for increasing the fiber input optical power and the optical power input to the receiver respectively, can be conventional erbium-doped optical fiber amplifiers, erbium-doped waveguide optical amplifiers, or doped medium optical amplifiers of other types.

The remote pumping unit provides pumping source to the remote pumping amplifier. To ensure that the optical fiber downstream of the remote pumping amplifier is as long as possible so that the whole cross-span transmission distance can be as long as possible, under the condition that the optical power of the Raman pumping light is large enough so as to ensure that the Raman gain and the noise factor are optimal, the remote pumping light is first coupled into an optical fiber, then the Raman pumping light is coupled into the optical fiber, that is, the location on which an Raman pumping unit is coupled into the optical fiber lies between the preamplifier and the coupling point on which the remote pumping unit is coupled into the optical fiber. When the optical power of the Raman pumping light is insufficient, to ensure enough Raman gain so as to ensure that the whole cross-span transmission distance can be as long as possible, the Raman pumping light can be first coupled into the optical fiber, and then the remote pumping light is coupled. At this point, as is different from the figures, the coupling point of the remote pumping light lies between the coupling point of the Raman pumping light and the preamplifier.

During operation, the signal light from an optical transmitter enters an optical fiber upstream of a remote pumping amplifier after being amplified by an optical power amplifier, and it is amplified after reaching the remotely pumped amplifier, then it enters an optical fiber downstream of the remote pumping amplifier. The signal light is amplified in this optical fiber by distributed Raman amplification, then it enters an optical preamplifier for further amplification, and finally it enters a receiver. In case that the influence of physical effects, such as chromatic dispersion, optical fiber nonlinear effect and so on, is neglected, the ultra long-haul transmission system is mainly limited by the optical power and the optical signal-to-noise ratio. The problem about optical power can be well solved by optical amplifier, but the optical signal-to-noise ratio is still left as a problem. In this embodiment, a distributed Raman amplifier is employed, the noise factor of which is much less than that of an erbium-doped optical fiber amplifier, so that the deterioration of optical signal-to-noise ratio can be greatly decreased. The function of a remote pumping amplifier in the system is equivalent to an optical line amplifier in an optical repeater system (as shown in Fig.2). Thus, it can be ensured that amplification is performed at higher optical power of the signal light, so the deterioration of optical signal-to-noise ratio can be decreased. It is different from an optical repeater system employing optical line amplifiers on that the line amplifier is a complex system with software and hardware, needs power supply and is required to be placed in an equipment room; while the remote pumping amplifier is passive and no power supply nor routine maintenance is required, and it can be buried underground like optical cables. Therefore, much longer single-span transmission distance can be ensured by using the optical transmission system of this embodiment.

### The Second Embodiment (Embodiment 2)

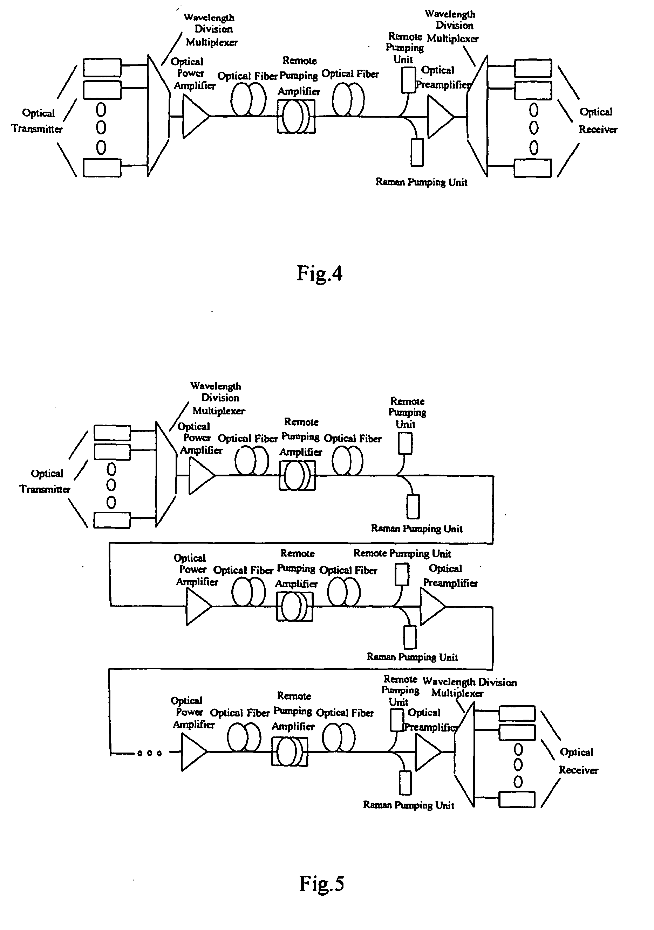

Fig.4 is a structural schematic diagram according to the second embodiment of the invention. As shown in Fig.4, compared with the first embodiment, in this embodiment, a wavelength division multiplexer is added in series between the optical transmitter and the optical power amplifier, and a wavelength division demultiplexer is added in series between the optical preamplifier and the optical receiver. The remaining structure is the same as that of the first embodiment. For simplification, the description of the same parts will be omitted; and in the following description of other embodiments, the description of the same parts is also omitted. As a result, a wavelength division multiplexing ultra long-haul repeaterless optical transmission system is formed.

In a wavelength division multiplexing system, the invention has apparent advantages over the prior art. The wavelength division multiplexing system transmits a plurality of wavelengths, and the cost of repeater facilities is very high. By using the present scheme, cost can be saved greatly.

Embodiment 1 and Embodiment 2 are applicable to a multi-stage optical repeater system. The number of repeaters can be reduced for the same optical transmission distance, so that cost can be saved. Fig.5 is a schematic diagram showing the application of the second embodiment of the invention in an ultra long-haul wavelength division multiplexing system with optical repeaters.

As shown in Fig.5, the system comprises a set of optical transmitters, a wavelength division multiplexer, an optical power amplifier, a remote pumping amplifier, one or more optical line amplifiers, an optical preamplifier, a wavelength division demultiplexer and a set of optical receivers connected by optical fibers. Corresponding to each optical line amplifier, the system further comprises a remote pumping unit and a Raman pumping unit, which can be respectively coupled into an optical fiber connected with their corresponding optical line amplifiers via a wavelength division multiplexer. That is, compared with Fig.4, several segments, each of which includes a remote pumping unit, a Raman pumping unit and a remotely pumped amplifier and is connected with optical line amplifiers via optical fibers, are added, so the optical transmission distance can be further extended. In comparison with the prior art, the number of optical repeaters can be decreased.

### The Third Embodiment (Embodiment 3)

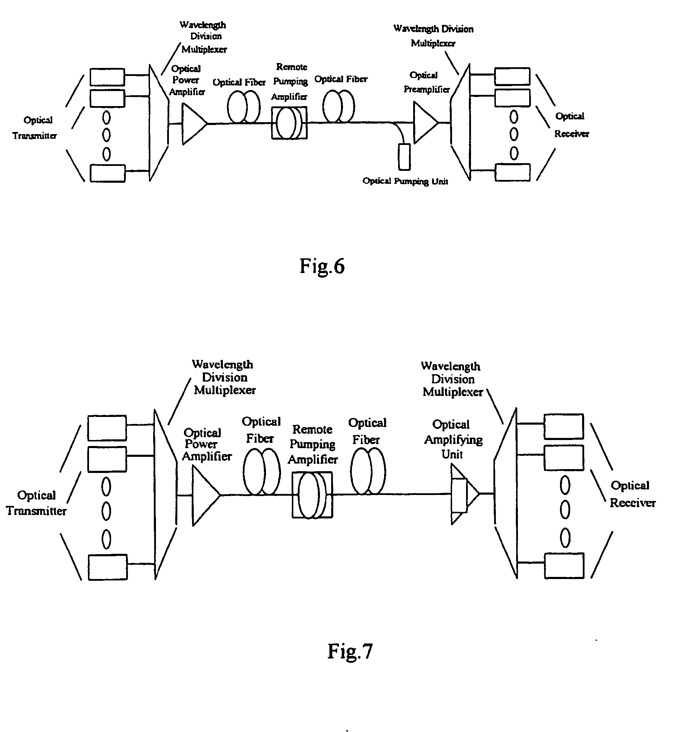

Fig.6 is a structural schematic diagram of an optical transmission system according to the third embodiment. As shown in Fig.6, compared with Embodiment 2, the remote pumping unit and the Raman pumping unit are integrated as an optical pumping unit. The principles of the circuit and the software kit of a Raman pumping unit are the same as those of a remote pumping unit, and the remote pumping unit and the Raman pumping unit are both required to be coupled into an optical fiber, so that they can be integrated in a unit with respect to equipment forms. In addition, as described above, the wavelength of the remote pumping light is around 1480 nm, while the wavelength of the Raman pumping light is 14XX nm and different to the remote pumping light wavelength. Thus, in fact, in this optimized scheme, the two units of the second embodiment are integrated as one unit, so that the equipment integrity is increased and the equipment cost is lowered.

Apparently, the Raman pumping unit and the remote pumping unit of Embodiment 1 can be integrated in one unit in the same way, and the same beneficial effect can be obtained.

The Raman pumping unit and the remote pumping unit are well known in the prior art. The fundamental principles of the Raman pumping unit and the remote pumping unit are both "optical pumping laser + wavelength division multiplexer + driver circuit + software control", but the specific wavelengths, circuits and devices employed may be different. The Raman pumping unit and the remote pumping unit are integrated in one unit with respect to the equipment attribute, and the fundamental principle is still "optical pumping laser + wavelength division multiplexer + driver circuit + software control". An optical pumping unit is a Raman pumping unit and a remote pumping unit integrated with respect to the equipment attribute. Specifically, Raman pumping (four pumping lasers supposed) and remote pumping (two pumping lasers supposed) can be realized by two circuit boards, wherein each circuit board is one unit, and there are four pumping devices and two pumping devices on each circuit board respectively. Here by integration, it means that two circuit boards are made into one, on which there are six pumping devices. As described above, since the circuit principles are the same as each other, a large amount of circuits can be shared, so that one circuit board and part of electronic devices can be saved. At the same time, since some pumping lasers can act as Raman pumping lasers and remote pumping lasers simultaneously in certain cases, some pumping lasers can also be saved. Therefore, the cost of this scheme is much lower.

### The Fourth Embodiment (Embodiment 4)

Fig.7 is a structural schematic diagram of an optical transmission system according to the fourth embodiment of the invention. As shown in Fig.7, compared with the third embodiment, the optical preamplifier is further integrated into the optical pumping unit, so that an optical amplifying unit integrated with a remote pumping unit, a Raman pumping unit and an optical preamplifier is formed. These three units all use optical pumping laser and passive device such as wavelength division multiplexer, etc, and are consistent in software and hardware, so they can be integrated as one unit. This integration scheme can further increase the equipment integrity and lower the cost.

For an optical amplifying unit, the principle is the same as that of an optical pumping unit. It's also integrated with respect to the equipment attribute, so it will not be described again here.

### The Fifth Embodiment (Embodiment 5)

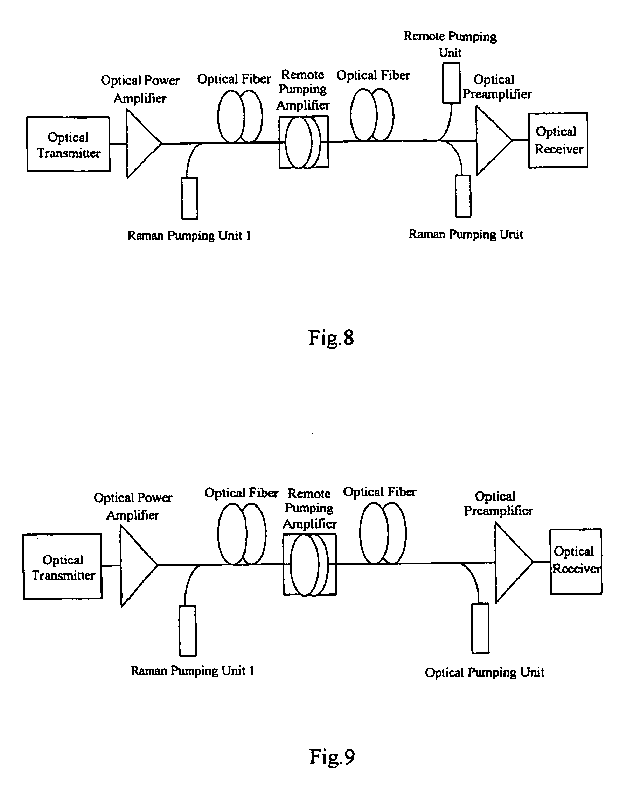

Fig.8 is a structural schematic diagram of an optical transmission system according to the fifth embodiment of the invention. As shown in Fig.8, compared with the first embodiment of the invention, another Raman pumping unit (Raman pumping unit 1) is added in series between the optical fibers which are located downstream of the optical power amplifier and upstream of the remote pumping amplifier. The pumping light from the Raman pumping unit is coupled into an optical fiber between the optical power amplifier and the remotely pumped amplifier, and it is transmitted in the same direction as the signal light. The signal light interacts with the pumping light in this segment of optical fiber, and is Raman-amplified. By using this scheme, the output power of the optical power amplifier can be lowered, that is, the fiber input power can be reduced. Since the magnitude of the fiber input power is closely related to the nonlinear effect of the optical fiber, by decreasing the fiber input power, the influence of nonlinear effect on signals can be reduced and the signal quality can be improved, so that longer transmission distance can be supported. In this scheme, distributed Raman amplification can also be performed for signal light in an optical fiber. In comparison with the scheme using erbium-doped optical fiber amplifiers, the deterioration of optical signal-to-noise ratio can be reduced and the transmission distance can be increased.

Moreover, a wavelength division multiplexer can be connected between the optical transmitter and the optical power amplifier, and a wavelength division demultiplexer can be connected between the preamplifier and the optical receiver, so that a wavelength division multiplexing repeaterless ultra long haul system can be set up.

Several segments each including Raman pumping unit 1, remote pumping amplifier, remote pumping unit and Raman pumping unit can also be connected with optical line amplifiers via optical fibers, so that the optical transmission distance can be further extended. In comparison with the prior art, the number of optical repeaters can be decreased.

### The Sixth Embodiment (Embodiment 6)

Fig.9 is a structural schematic diagram of an optical transmission system according to the sixth embodiment of the invention. As shown in Fig.9, compared with Embodiment 5, the remote pumping unit and the Raman pumping unit are integrated as one optical pumping unit. Therefore, the equipment integrity can be increased and the device cost can be saved.

### The Seventh Embodiment (Embodiment 7)

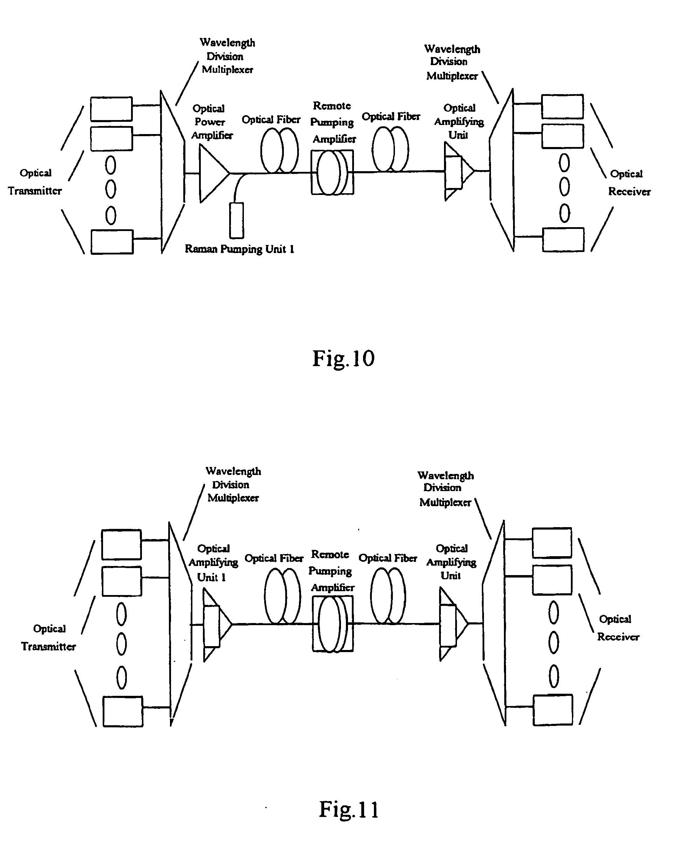

Fig.10 is a structural schematic diagram of an optical transmission system according to the seventh embodiment of the invention. As shown in Fig.10, compared with Embodiment 5, the remote pumping unit, the Raman pumping unit and the optical preamplifier are integrated as one optical amplifying unit. Therefore, the equipment integrity can be increased and the device cost can be saved. Similar to the second embodiment, a wavelength division multiplexer and a wavelength division demultiplexer are added, so that a wavelength division multiplexing ultra long-haul optical transmission system can be formed.

### The Eighth Embodiment (Embodiment 8)

Fig.11 is a structural schematic diagram of an optical transmission system according to the eighth embodiment of the invention. As shown in Fig.11, compared with Embodiment 7, the second Raman pumping unit (Raman pumping unit 1) and the optical power amplifier are integrated as a second optical amplifying unit (optical amplifying unit 1).

### The Ninth Embodiment (Embodiment 9)

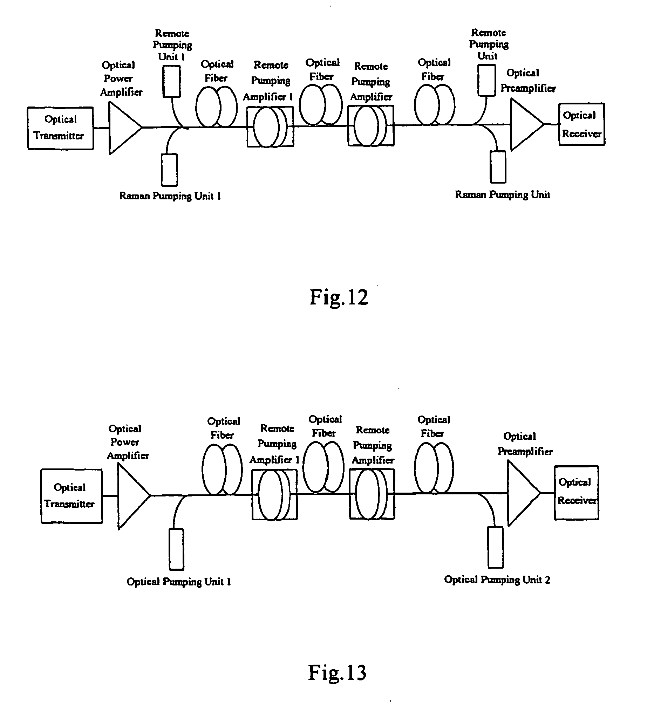

Fig.12 is a structural schematic diagram of an optical transmission system according to the ninth embodiment of the invention. As shown in Fig.12, compared with Embodiment 5, another remote pumping unit (remote pumping unit 1) and another remotely pumped amplifier (remotely pumped amplifier 1) are added. Remotely pumped amplifier 1 is connected in series between the optical power amplifier and the remote pumping amplifier via optical fibers. Remote pumping unit 1 provides pumping light, which is transmitted in the same direction as the signal light and then reaches the remotely pumped amplifier 1. Remotely pumped amplifier 1 amplifies the signal light using the pumping light. Since there are two remotely pumped amplifiers, it's equivalent that two optical repeaters are added into the optical fiber link. In comparison with a system without these two remote pumping amplifiers, amplification can be performed at a higher optical power of the signal light, and the optical signal-to-noise ratio upstream of the receiver can be kept at a higher level. At the same time, a forward distributed Raman amplification and a backward distributed Raman amplification are also employed in the system, and the noise factor of a Raman amplifier is much less than that of an erbium-doped optical fiber amplifier, so that the deterioration of optical signal-to-noise ratio can be lowered. Therefore, much longer transmission distance can be supported.

Similarly, several segments each including remote pumping amplifier 1, remote pumping unit 1, Raman pumping unit 1, remotely pumped amplifier, remote pumping unit and Raman pumping unit are connected with optical line amplifiers via optical fibers, so the optical transmission distance can be further extended. In comparison with the prior art, the number of optical repeaters can be decreased.

### The Tenth Embodiment (Embodiment 10)

Fig.13 is a structural schematic diagram of an optical transmission system according to the tenth embodiment of the invention. As shown in Fig.13, compared with Embodiment 9, Raman pumping unit 1 and remote pumping unit 1 are integrated as optical pumping unit 1, and the Raman pumping unit and the remote pumping unit are integrated as optical pumping unit 2. Therefore, the equipment integrity can be increased and the equipment cost can be lowered.

### The Eleventh Embodiment (Embodiment 11)

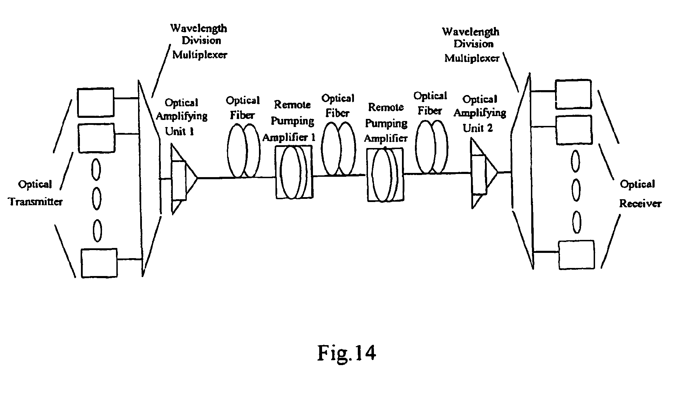

Fig.14 is a structural schematic diagram of an optical transmission system according to the eleventh embodiment of the invention. As shown in Fig.14, compared with Embodiment 9, the optical power amplifier, Raman pumping unit 1 and remote pumping unit 1 in Fig.12 are integrated as optical amplifying unit 1, and the optical preamplifier, the remote pumping unit and the Raman pumping unit in Fig.12 are integrated as optical amplifying unit 2. Therefore, the equipment integrity can be increased and the device cost can be saved. Similar to the second embodiment, a wavelength division multiplexer and a wavelength division demultiplexer are added, so that a wavelength division multiplexing optical transmission system can be formed.

Additional advantages and modifications will readily occur to those skilled in the art. Therefore, the invention in its broader aspects is not limited to the specific details and representative embodiments shown and described herein. Accordingly, various variations and modifications can be made without departing from the scope of the invention as defined by the appended claims and their equivalents.

## Claims

1. An optical transmission system, comprising:
an optical transmitter, for transmitting signal light;
an optical power amplifier, for increasing the power of said signal light;
a remote pumping unit, for supplying remote pumping light;
a remotely pumped amplifier comprising a passive gain medium, for amplifying said signal light with the remote pumping light;
a Raman pumping unit, for providing Raman pumping light for Raman amplifying said signal light;
an optical preamplifier, for amplifying signal light which has been power amplified, remote pumping amplified and Raman pumping amplified; and
an optical receiver, for receiving signal light which has been amplified by the optical preamplifier;
connected in turn via an optical fiber;
wherein
the remote pumping light is a pumping light in the waveband of 1480nm, the wavelength of the Raman pumping light is different from that of remote pumping light, and the wavelength of the Raman pumping light is in a range of 1400nm-1499nm.

2. The optical transmission system according to claim 1, wherein: the Raman pumping unit and the remote pumping unit are located on the same side of the remotely pumped amplifier, and are at the same node as the optical preamplifier or the optical power amplifier, and the Raman pumping unit and the remote pumping unit are integrated as an optical pumping unit.

3. The optical transmission system according to claim 1, wherein: the Raman pumping unit and the remote pumping unit are located on the same side of the remotely pumped amplifier, and are at the same node as the optical preamplifier or the optical power amplifier, and the Raman pumping unit and the remote pumping unit are integrated with the optical preamplifier or the optical power amplifier to form an optical amplifying unit.

4. The optical transmission system according to claim 1, wherein: the Raman pumping unit and the remote pumping unit are located on the same side of the remotely pumped amplifier, and are at the same node as the optical preamplifier or the optical power amplifier; the system further comprises another Raman pumping unit, which is on the other side of the remote pumping amplifier, for providing Raman pumping light, and the Raman pumping light Raman-amplifies the signal light in the optical fiber on the other side of the remotely pumped amplifier.

5. The optical transmission system according to claim 4, wherein:
the Raman pumping unit and the remote pumping unit are integrated in an optical pumping unit; or
the Raman pumping unit and the remote pumping unit are integrated with the optical power amplifier or the optical preamplifier to form an optical amplifying unit.

6. The optical transmission system according to claim 1, wherein: the Raman pumping unit and the remote pumping unit are located on the same side of the remotely pumped amplifier, and are at the same node as the optical preamplifier or the optical power amplifier; the system further comprises another remote pumping unit and another remotely pumped amplifier;
the another remote pumping unit and the another remotely pumped amplifier are located on the other side of the remotely pumped amplifier;
the another remote pumping unit is coupled to the optical fiber for providing remote pumping light that reaches the another remotely pumped amplifier, and the another remotely pumped amplifier uses the remote pumping light from the another remote pumping unit to amplify the signal light.

7. The optical transmission system according to claim 6, wherein:
the Raman pumping unit and the remote pumping unit are integrated in an optical pumping unit; or
the Raman pumping unit and the remote pumping unit are integrated with the optical power amplifier or the optical preamplifier to form an optical amplifying unit.

8. The optical transmission system according to claim 6, wherein: the system further comprises another Raman pumping unit, which is on the same side as the another remote pumping unit.

9. The optical transmission system according to claim 8, wherein: the Raman pumping unit and the remote pumping unit are integrated as an optical pumping unit, and/or the another Raman pumping unit and the another remote pumping unit are integrated as an optical pumping unit.

10. The optical transmission system according to claim 8, wherein:the Raman pumping unit and the remote pumping unit are integrated with the optical power amplifier or the optical preamplifier to form an optical amplifying unit, and/or the another Raman pumping unit and the another remote pumping unit are integrated with the optical power amplifier or the optical preamplifier to form an optical amplifying unit.

11. The optical transmission system according to claim 1, wherein the system further comprises:
at least one optical repeater; and
a remotely pumped amplifier, a remote pumping unit and a Raman pumping unit corresponding to each optical repeater.

12. The optical transmission system according to claim 4, wherein the system further comprises:
at least one optical repeater; and
a remote pumping unit, a Raman pumping unit, a remotely pumped amplifier and another Raman pumping unit corresponding to each optical repeater.

13. The optical transmission system according to claim 5, wherein the system further comprises:
at least one optical repeater; and
a remote pumping unit, a Raman pumping unit, a remotely pumped amplifier and another remote pumping unit corresponding to each optical repeater.

14. The optical transmission system according to claim 6, wherein the system further comprises:
at least one optical repeater; and
a remote pumping unit, a Raman pumping unit, a remotely pumped amplifier, another remote pumping unit, another remotely pumped amplifier and another Raman pumping unit, corresponding to each optical repeater.

15. The optical transmission system according to any one of claims 11 to 14, wherein: the optical repeater is an optical line amplifier.

16. The optical transmission system according to any one of claims 1 to 14, wherein: in case that there are at least two optical transmitters, and there are at least two optical receivers, the system further comprises:
a wavelength division multiplexer, which is connected between the optical power amplifier and the optical transmitter;
a wavelength division demultiplexer, which is connected between the optical preamplifier and the optical receiver.

17. The optical transmission system according to any one of claims 1 to 14, wherein: the remotely pumped amplifier is a doped gain medium unit, and the gain medium is an erbium-doped optical fiber or an erbium-doped waveguide device.

18. The optical transmission system according to any one of claims 1 to 14, wherein: the optical power amplifier and the optical preamplifier are erbium-doped optical fiber optical amplifiers or erbium-doped waveguide optical amplifiers.

19. The optical transmission system according to claim 15, wherein: the optical line amplifier is an erbium-doped optical fiber amplifier or an erbium-doped waveguide optical amplifier.

20. The optical transmission system according to any one of claims 1 to 19, wherein the wavelength of the Raman pumping light is any one selected from a group consisting of 1425nm, 1455nm and 1490nm.

21. A method for optical amplification in an optical transmission system, comprising:
amplifying the power of signal light from an optical transmitter by an optical power amplifier;
amplifying the power amplified signal light under the interaction of passive gain medium and remote pumping light in a remotely pumped amplifier;
amplifying the power amplified signal light with Raman pumping light; and
preamplifying signal light, which has been power amplified, remote pumping amplified and Raman pumping amplified, by an optical preamplifier, and receiving the preamplified signal light by an optical receiver;
wherein
the remote pumping light is a pumping light in the waveband of 1480nm, the wavelength of the Raman pumping light is different from that of the remote pumping light, and the wavelength of the Raman pumping light is in a range of 1400nm-1499nm.

22. The method according to claim 21, wherein: the remote pumping light is provided by a remote pumping unit.

23. The method according to claim 21 or 22, wherein: the remote pumping light is used by the remotely pumped amplifier for amplifying the signal light which has been power amplified.

24. The method according to claim 21, wherein: the Raman pumping light is provided by a Raman pumping unit.

25. The method according to claim 21, wherein: the gain medium is an erbium-doped optical fiber or an erbium-doped waveguide device.

26. The method according to any one of claims 21 to 25, wherein the wavelength of the Raman pumping light is any one selected from a group consisting of 1425nm, 1455nm and 1490nm.

## Patentansprüche

1. Optisches Übertragungssystem, umfassend:
einen optischen Sender zum Senden von Signallicht;
einen optischen Leistungsverstärker zum Vergrößern der Leistung des Signallichts;
eine Fernpumpeinheit zum Zuführen von Fernpumplicht;
einen ferngepumpten Verstärker mit einem passiven Verstärkungsmedium zum Verstärken des Signallichts mit dem Fernpumplicht;
eine Raman-Pumpeinheit zum Bereitstellen von Raman-Pumplicht zur Raman-Verstärkung des Signallichts;
einen optischen Vorverstärker zum Verstärken des Signallichts, das leistungsverstärkt, fernpumpverstärkt und Raman-pumpverstärkt wurde; und
einen optischen Empfänger zum Empfangen von Signallicht, das durch den optischen Vorverstärker verstärkt wurde; der seinerseits über eine optische Faser verbunden ist;
wobei
das Fernpumplicht ein Pumplicht in dem Wellenband von 1480 nm ist, die Wellenlänge des Raman-Pumplichts von der des Fernpumplichts verschieden ist und
die Wellenlänge des Raman-Pumplichts in einem Bereich von 1400 nm - 1499 nm liegt.

2. Optisches Übertragungssystem nach Anspruch 1, wobei sich die Raman-Pumpeinheit und die Fernpumpeinheit auf derselben Seite des ferngepumpten Verstärkers befinden und sich auf demselben Knoten wie der optische Vorverstärker oder der optische Leistungsverstärker befinden und die Raman-Pumpeinheit und die Fernpumpeinheit als eine optische Pumpeinheit integriert sind.

3. Optisches Übertragungssystem nach Anspruch 1, wobei sich die Raman-Pumpeinheit und die Fernpumpeinheit auf derselben Seite des ferngepumpten Verstärkers befinden und sich auf demselben Knoten wie der optische Vorverstärker oder der optische Leistungsverstärker befinden und die Raman-Pumpeinheit und die Fernpumpeinheit mit dem optischen Vorverstärker oder dem optischen Leistungsverstärker integriert sind, um eine optische Verstärkungseinheit zu bilden.

4. Optisches Übertragungssystem nach Anspruch 1, wobei sich die Raman-Pumpeinheit und die Fernpumpeinheit auf derselben Seite des ferngepumpten Verstärkers befinden und sich auf demselben Knoten wie der optische Vorverstärker oder der optische Leistungsverstärker befinden; wobei das System ferner eine weitere Raman-Pumpeinheit umfasst, die sich auf der anderen Seite des Fernpumpverstärkers befindet, um Raman-Pumplicht bereitzustellen, und das Raman-Pumplicht das Signallicht in der optischen Faser auf der anderen Seite des ferngepumpten Verstärkers Raman-verstärkt.

5. Optisches Übertragungssystem nach Anspruch 4, wobei
die Raman-Pumpeinheit und die Fernpumpeinheit in eine optische Pumpeinheit integriert sind; oder
die Raman-Pumpeinheit und die Fernpumpeinheit mit dem optischen Leistungsverstärker oder dem optischen Vorverstärker integriert sind, um eine optische Verstärkungseinheit zu bilden.

6. Optisches Übertragungssystem nach Anspruch 1, wobei sich die Raman-Pumpeinheit und die Fernpumpeinheit auf derselben Seite des ferngepumpten Verstärkers befinden und sich auf demselben Knoten wie der optische Vorverstärker oder der optische Leistungsverstärker befinden; wobei das System ferner eine weitere Fernpumpeinheit und einen weiteren ferngepumpten Verstärker umfasst;
sich die weitere Fernpumpeinheit und der weitere ferngepumpte Verstärker auf der der anderen Seite des ferngepumpten Verstärkers befinden;
die weitere Fernpumpeinheit mit der optischen Faser gekoppelt ist, um Fernpumplicht bereitzustellen, das den weiteren ferngepumpten Verstärker erreicht, und der weitere ferngepumpte Verstärker das Fernpumplicht aus der weiteren Fernpumpeinheit zur Verstärkung des Signallichts verwendet.

7. Optisches Übertragungssystem nach Anspruch 6, wobei
die Raman-Pumpeinheit und die Fernpumpeinheit in eine optische Pumpeinheit integriert sind; oder
die Raman-Pumpeinheit und die Fernpumpeinheit mit dem optischen Leistungsverstärker oder dem optischen Vorverstärker integriert sind, um eine optische Verstärkungseinheit zu bilden.

8. Optisches Übertragungssystem nach Anspruch 6, wobei das System ferner eine weitere Raman-Pumpeinheit umfasst, die sich auf derselben Seite wie die weitere Fernpumpeinheit befindet.

9. Optisches Übertragungssystem nach Anspruch 8, wobei die Raman-Pumpeinheit und die Fernpumpeinheit als eine optische Pumpeinheit integriert sind und/oder die weitere Raman-Pumpeinheit und die weitere Fernpumpeinheit als eine optische Pumpeinheit integriert sind.

10. Optisches Übertragungssystem nach Anspruch 8, wobei die Raman-Pumpeinheit und die Fernpumpeinheit mit dem optischen Leistungsverstärker oder dem optischen Vorverstärker integriert sind, um eine optische Verstärkungseinheit zu bilden, und/oder die weitere Raman-Pumpeinheit und die weitere Fernpumpeinheit mit dem optischen Leistungsverstärker oder dem optischen Vorverstärker integriert sind, um eine optische Verstärkungseinheit zu bilden.

11. Optisches Übertragungssystem nach Anspruch 1, wobei das System ferner Folgendes umfasst:
mindestens einen optischen Repeater; und
einen ferngepumpten Verstärker, eine Fernpumpeinheit und eine Raman-Pumpeinheit entsprechend jedem optischen Repeater.

12. Optisches Übertragungssystem nach Anspruch 4, wobei das System ferner Folgendes umfasst:
mindestens einen optischen Repeater; und
eine Fernpumpeinheit, eine Raman-Pumpeinheit, einen ferngepumpten Verstärker und eine weitere Raman-Pumpeinheit entsprechend jedem optischen Repeater.

13. Optisches Übertragungssystem nach Anspruch 5, wobei das System ferner Folgendes umfasst:
mindestens einen optischen Repeater; und
eine Fernpumpeinheit, eine Raman-Pumpeinheit, einen ferngepumpten Verstärker und eine weitere Fernpumpeinheit entsprechend jedem optischen Repeater.

14. Optisches Übertragungssystem nach Anspruch 6, wobei das System ferner Folgendes umfasst:
mindestens einen optischen Repeater; und
eine Fernpumpeinheit, eine Raman-Pumpeinheit, einen ferngepumpten Verstärker,
eine weitere Fernpumpeinheit, einen weiteren ferngepumpten Verstärker und eine weitere Raman-Pumpeinheit entsprechend jedem optischen Repeater.

15. Optisches Übertragungssystem nach einem der Ansprüche 11 bis 14, wobei der optische Repeater ein optischer Leitungsverstärker ist.

16. Optisches Übertragungssystem nach einem der Ansprüche 1 bis 14, wobei, falls mindestens zwei optische Sender und mindestens zwei optische Empfänger vorliegen, das System ferner Folgendes umfasst:
einen Wellenlängenmultiplexer, der zwischen den optischen Leistungsverstärker und
den optischen Sender geschaltet ist;
einen Wellenlängendemultiplexer, der zwischen den optischen Vorverstärker und den optischen Empfänger geschaltet ist.

17. Optisches Übertragungssystem nach einem der Ansprüche 1 bis 14, wobei der ferngepumpte Verstärker eine Einheit mit einem dotierten Verstärkungsmedium ist und das Verstärkungsmedium eine erbiumdotierte optische Faser oder eine erbiumdotierte Wellenleitereinrichtung ist.

18. Optisches Übertragungssystem nach einem der Ansprüche 1 bis 14, wobei der optische Leistungsverstärker und der optische Vorverstärker optische Verstärker mit erbiumdotierter optischer Faser oder optische Verstärker mit erbiumdotiertem Wellenleiter sind.

19. Optisches Übertragungssystem nach Anspruch 15, wobei der optische Leitungsverstärker ein Verstärker mit erbiumdotierter optischer Faser oder ein optischer Verstärker mit erbiumdotiertem Wellenleiter ist.

20. Optisches Übertragungssystem nach einem der Ansprüche 1 bis 19, wobei die Wellenlänge des Raman-Pumplichts eine beliebige aus der folgenden Gruppe ist: 1425 nm, 1455 nm und 1490 nm.

21. Verfahren zur optischen Verstärkung in einem optischen Übertragungssystem mit den folgenden Schritten:
Verstärken der Leistung des Signallichts aus einem optischen Sender durch einen optischen Leistungsverstärker;
Verstärken des leistungsverstärkten Signallichts unter der Einwirkung eines passiven Verstärkungsmediums und von Fernpumplicht in einem ferngepumpten Verstärker;
Verstärken des leistungsverstärkten Signals mit Raman-Pumplicht; und
Vorverstärken von Signallicht, das leistungsverstärkt, fernpumpverstärkt und Raman-pumpverstärkt wurde, durch einen optischen Vorverstärker und Empfangen des vorverstärkten Signallichts durch einen optischen Empfänger;
wobei
das Fernpumplicht ein Pumplicht in dem Wellenband von 1480 nm ist, die Wellenlänge des Raman-Pumplichts von der des Fernpumplichts verschieden ist und
die Wellenlänge des Raman-Pumplichts in einem Bereich von 1400 nm - 1499 nm liegt.

22. Verfahren nach Anspruch 21, wobei das Fernpumplicht durch eine Fernpumpeinheit bereitgestellt wird.

23. Verfahren nach Anspruch 21 oder 22, wobei das Fernpumplicht von dem ferngepumpten Verstärker zur Verstärkung des Signallichts, das leistungsverstärkt wurde, verwendet wird.

24. Verfahren nach Anspruch 21, wobei das Raman-Pumplicht durch eine Raman-Pumpeinheit bereitgestellt wird.

25. Verfahren nach Anspruch 21, wobei das Verstärkungsmedium eine erbiumdotierte optische Faser oder eine erbiumdotierte Wellenleitereinrichtung ist.

26. Verfahren nach einem der Ansprüche 21 bis 25, wobei die Wellenlänge des Raman-Pumplichts eine beliebige aus der folgenden Gruppe ist: 1425 nm, 1455 nm und 1490 nm.

## Revendications

1. Système de transmission optique comprenant :
un émetteur optique pour émettre de la lumière de signal ;
un amplificateur de puissance optique pour accroître la puissance de ladite lumière de signal ;
une unité de pompage à distance pour fournir de la lumière de pompage à distance ;
un amplificateur pompé à distance comprenant un support à gain passif pour amplifier ladite lumière de signal avec la lumière de pompage à distance ;
une unité de pompage Raman pour fournir de la lumière de pompage Raman pour l'amplification Raman de ladite lumière de signal ;
un préamplificateur optique pour amplifier la lumière de signal dont la puissance a été amplifiée, amplifiée par pompage à distance et amplifiée par pompage Raman ; et
un récepteur optique pour recevoir la lumière de signal qui a été amplifiée par le préamplificateur optique connecté à son tour par le biais d'une fibre optique ;
la lumière de pompage à distance étant une lumière de pompage dans la bande de longueurs d'onde de 1480 nm, la longueur d'onde de la lumière de pompage Raman étant différente de celle de la lumière de pompage à distance et la longueur d'onde de la lumière de pompage Raman se trouvant dans la plage de 1400 nm à 1499 nm.

2. Système de transmission optique selon la revendication 1, l'unité de pompage Raman et l'unité de pompage à distance se trouvant du même côté de l'amplificateur pompé à distance et se trouvant sur le même noeud que le préamplificateur optique ou l'amplificateur de puissance optique et l'unité de pompage Raman ainsi que l'unité de pompage à distance étant intégrées sous la forme d'une unité de pompage optique.

3. Système de transmission optique selon la revendication 1, l'unité de pompage Raman et l'unité de pompage à distance se trouvant du même côté de l'amplificateur pompé à distance et se trouvant sur le même noeud que le préamplificateur optique ou l'amplificateur de puissance optique et l'unité de pompage Raman ainsi que l'unité de pompage à distance étant intégrées avec le préamplificateur optique ou l'amplificateur de puissance optique pour former une unité d'amplification optique.

4. Système de transmission optique selon la revendication 1, l'unité de pompage Raman et l'unité de pompage à distance se trouvant du même côté de l'amplificateur pompé à distance et se trouvant sur le même noeud que le préamplificateur optique ou l'amplificateur de puissance optique ; le système comprenant en plus une autre unité de pompage Raman qui se trouve de l'autre côté de l'amplificateur à pompage à distance pour fournir de la lumière de pompage Raman et la lumière de pompage Raman effectue une amplification Raman de la lumière de signal dans la fibre optique de l'autre côté de l'amplificateur pompé à distance.

5. Système de transmission optique selon la revendication 4,
l'unité de pompage Raman et l'unité de pompage à distance étant intégrées dans une unité de pompage optique ; ou
l'unité de pompage Raman et l'unité de pompage à distance étant intégrées avec l'amplificateur de puissance optique ou le préamplificateur optique pour former une unité d'amplification optique.

6. Système de transmission optique selon la revendication 1, l'unité de pompage Raman et l'unité de pompage à distance se trouvant du même côté de l'amplificateur pompé à distance et se trouvant sur le même noeud que le préamplificateur optique ou l'amplificateur de puissance optique ; le système comprenant en plus une autre unité de pompage à distance et un autre amplificateur pompé à distance ;
l'autre unité de pompage à distance et l'autre amplificateur pompé à distance se trouvant de l'autre côté de l'amplificateur pompé à distance ;
l'autre unité de pompage à distance étant connectée à la fibre optique pour fournir de la lumière de pompage à distance qui atteint l'autre amplificateur pompé à distance et l'autre amplificateur pompé à distance utilisant la lumière de pompage à distance de l'autre unité de pompage à distance pour amplifier la lumière de signal.

7. Système de transmission optique selon la revendication 6,
l'unité de pompage Raman et l'unité de pompage à distance étant intégrées dans une unité de pompage optique ; ou
l'unité de pompage Raman et l'unité de pompage à distance étant intégrées avec l'amplificateur de puissance optique ou le préamplificateur optique pour former une unité d'amplification optique.

8. Système de transmission optique selon la revendication 6, le système comprenant en plus une autre unité de pompage Raman qui se trouve du même côté que l'autre unité de pompage à distance.

9. Système de transmission optique selon la revendication 8, l'unité de pompage Raman et l'unité de pompage à distance étant intégrées sous la forme d'une unité de pompage optique et/ou l'autre unité de pompage Raman et l'autre unité de pompage à distance étant intégrées sous la forme d'une unité de pompage optique.

10. Système de transmission optique selon la revendication 8, l'unité de pompage Raman et l'unité de pompage à distance étant intégrées avec l'amplificateur de puissance optique ou le préamplificateur optique pour former une unité d'amplification optique et/ou l'autre unité de pompage Raman et l'autre unité de pompage à distance étant intégrées avec l'amplificateur de puissance optique ou le préamplificateur optique pour former une unité d'amplification optique.

11. Système de transmission optique selon la revendication 1, le système comprenant en plus :
au moins un répéteur optique ; et
un amplificateur pompé à distance, une unité de pompage à distance et une unité de pompage Raman correspondant à chaque répéteur optique.

12. Système de transmission optique selon la revendication 4, le système comprenant en plus :
au moins un répéteur optique ; et
une unité de pompage à distance, une unité de pompage Raman, un amplificateur pompé à distance et une autre unité de pompage Raman correspondant à chaque répéteur optique.

13. Système de transmission optique selon la revendication 5, le système comprenant en plus :
au moins un répéteur optique ; et
une unité de pompage à distance, une unité de pompage Raman, un amplificateur pompé à distance et une autre unité de pompage à distance correspondant à chaque répéteur optique.

14. Système de transmission optique selon la revendication 6, le système comprenant en plus :
au moins un répéteur optique ; et
une unité de pompage à distance, une unité de pompage Raman, un amplificateur pompé à distance, une autre unité de pompage à distance, un autre amplificateur pompé à distance et une autre unité de pompage Raman correspondant à chaque répéteur optique.

15. Système de transmission optique selon l'une quelconque des revendications 11 à 14, le répéteur optique étant un amplificateur de ligne optique.

16. Système de transmission optique selon l'une quelconque des revendications 1 à 14, dans le cas où il existe au moins deux émetteurs optiques et au moins deux récepteurs optiques, le système comprenant en plus :
un multiplexeur à division de longueur d'onde qui est connecté entre l'amplificateur de puissance optique et l'émetteur optique ;
un démultiplexeur à division de longueur d'onde qui est connecté entre le préamplificateur optique et le récepteur optique.

17. Système de transmission optique selon l'une quelconque des revendications 1 à 14, l'amplificateur pompé à distance étant une unité à support à gain dopé et le support à gain étant une fibre optique dopée à l'erbium ou un dispositif guide d'onde dopé à l'erbium.

18. Système de transmission optique selon l'une quelconque des revendications 1 à 14, l'amplificateur de puissance optique et le préamplificateur optique étant des amplificateurs optiques de fibre optique dopés à l'erbium ou des amplificateurs optiques de guide d'onde dopés à l'erbium.

19. Système de transmission optique selon la revendication 15, l'amplificateur de ligne optique étant un amplificateur de fibre optique dopé à l'erbium ou un amplificateur optique de guide d'onde dopé à l'erbium.

20. Système de transmission optique selon l'une quelconque des revendications 1 à 19, la longueur d'onde de la lumière de pompage Raman étant l'une quelconque choisie dans un groupe comprenant 1425 nm, 1455 nm et 1490 nm.

21. Procédé d'amplification optique dans un système de transmission optique comprenant :
l'amplification par un amplificateur de puissance optique de la puissance de la lumière de signal émise par un émetteur optique ;
l'amplification de la lumière de signal à puissance amplifiée avec l'interaction d'un support à gain passif et de lumière de pompage à distance dans un amplificateur pompé à distance ; l'amplification de la lumière de signal à puissance amplifiée avec de la lumière de pompage Raman ; et la préamplification de la lumière de signal dont la puissance a été amplifiée, amplifiée par pompage à distance et amplifiée par pompage Raman, avec un préamplificateur optique, puis réception de la lumière de signal préamplifiée par un récepteur optique ; la lumière de pompage à distance étant une lumière de pompage dans la bande de longueurs d'onde de 1480 nm, la longueur d'onde de la lumière de pompage Raman étant différente de celle de la lumière de pompage à distance et la longueur d'onde de la lumière de pompage Raman se trouvant dans la plage de 1400 nm à 1499 nm.

22. Procédé selon la revendication 21, la lumière de pompage à distance étant fournie par une unité de pompage à distance.

23. Procédé selon la revendication 21 ou 22, la lumière de pompage à distance étant utilisée par l'amplificateur pompé à distance pour amplifier la lumière de signal dont la puissance a été amplifiée.

24. Procédé selon la revendication 21, la lumière de pompage Raman étant fournie par une unité de pompage Raman.

25. Procédé selon la revendication 21, le support à gain étant une fibre optique dopée à l'erbium ou un dispositif guide d'onde dopé à l'erbium.

26. Procédé selon l'une quelconque des revendications 21 à 25, la longueur d'onde de la lumière de pompage Raman étant l'une quelconque choisie dans un groupe comprenant 1425 nm, 1455 nm et 1490 nm.
